(19) Europäisches Patentamt
European Patent Office
Office européen des brevets

(11) **EP 2 479 086 A2**

(12) **EUROPÄISCHE PATENTANMELDUNG**

(43) Veröffentlichungstag:
**25.07.2012 Patentblatt 2012/30**

(51) Int Cl.:
***B62D 13/06*** *(2006.01)*

(21) Anmeldenummer: **12150766.9**

(22) Anmeldetag: **11.01.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **21.01.2011 DE 102011002959**

(71) Anmelder: **ZF Lenksysteme GmbH**
**73527 Schwäbisch Gmünd (DE)**

(72) Erfinder:
• **Braun, Andreas**
**73116 Wäschenbeuren (DE)**
• **Kogel, Walter**
**73453 Abtsgmünd (DE)**
• **Löffler, Hans-Peter**
**DE-73529 Schwäbisch Gmünd (DE)**

(54) **Verfahren und Vorrichtung zur Bestimmung des Gespannwinkels zwischen Anhänger und Zugfahrzeug eines Zugfahrzeug-Anhänger-Gespanns**

(57) Vorgeschlagen wird ein Verfahren (100) zur Bestimmung des Gespannwinkels ($\alpha$) zwischen Zugfahrzeug (1) und Anhänger (2) eines Zugfahrzeug-Anhänger-Gespanns, wobei Drehzahlen von Rädern zumindest einer Achse des Anhängers (2) erfasst werden. Das Verfahren umfasst folgende Schritte:

Erfassen (110) von ersten Drehzahlen (v9) eines an einer der starren Achse des Anhängers (2) gelagerten ersten Rades (9);

Erfassen (120) von zweiten Drehzahlen (v11) eines an einer der gelenkten Achse des Anhängers (2) gelagerten zweiten Rades (11);

Erfassen (130) von dritten Drehzahlen (v10; v12) eines an der starren oder gelenkten Achse des Anhängers (2) gelagerten dritten Rades (10; 12);

Auswerten (140) eines Radeinschlagwinkels ($\beta$) an der angelenkten Achse des Anhängers (2); und

Anwenden (150) mindestens einer Berechnungsformel (F1; F2) mittels des erfassten Radeinschlagwinkels ($\beta$) und der erfassten Drehzahlen oder daraus abgeleiteter Größen.

Demzufolge werden zur Realisierung des Verfahrens lediglich an den Achsen des Anhängers, nämlich an der starren Achse und an der angelenkten Achse Sensoren benötigt. Es müssen keine Drehzahlen an den Achsen der Zugmaschine erfasst werden, um den gesuchten Gespannwinkel bzw. Knickwinkel zu bestimmen.

Fig. 2

110
120
130
140
150
160

100

EP 2 479 086 A2

**Beschreibung**

Die Erfindung betrifft ein Verfahren zur Bestimmung des Gespannwinkels zwischen Anhänger und Zugfahrzeug eines Zugfahrzeug-Anhänger-Gespanns nach dem Oberbegriff des Anspruchs 1. Weiterhin betrifft die Erfindung eine Vorrichtung zur Durchführung des Verfahrens nach dem Oberbegriff des nebengeordneten Anspruchs. Insbesondere betrifft die Erfindung die Bestimmung des Gespannwinkels bei einem Gespann bestehend aus einem Zugfahrzeug, das Sattelzugmaschine ausgebildet ist, und aus einem Anhänger, der als ein Sattelzugauflieger ausgebildet ist.

Das Manövrieren eines Zugfahrzeug-Anhänger-Gespanns, insbesondere beim Rückwärtsfahren und Rangieren, erfordert ein hohes Maß fahrerischen Könnens. Zur Unterstützung des Fahrers sind elektronische Systeme, wie z.B. Kamera, Abstandswarner und dergleichen bekannt. Auch sind Lenksysteme bekannt, die das Manövrieren des Zugfahrzeug-Anhänger-Gespanns unterstützen. Dabei spielt die Kenntnis des sogenannten Gespannwinkels eine wesentliche Rolle, d.h. die Kenntnis des Knickwinkels zwischen Zugmaschine (Sattelzugmaschine) und Änhänger (Sattelauflieger) bezogen auf die Längsachse des Zugfahrzeuges.

Aus der DE 103 33 998 A1 ist ein Verfahren zur Bestimmung des Gespannwinkels zwischen Anhänger und Zugfahrzeug eines Zugfahrzeug-Anhänger-Gespanns bekannt. Dort wird allgemein vorgeschlagen, die Raddrehzahlen von Rädern der Zugmaschine und die Raddrehzahlen von Rädern des Anhängers zu erfasssen und aus der Differenz der Raddrehzahlen den gesuchten Gespannwinkel zu bestimmen. Das Verfahren wird allerdings nicht sehr detailliert beschrieben. Es wird lediglich vorgeschlagen, das Verfahren durch eine in ein ABS-System integrierte Vorrichtung ausführen zu lassen, die als Steuergerät des ABS-Systems ausgebildet ist. Auch wenn das dortige Verfahren nicht im Detail tiefergehend beschrieben wird, so ist es klar, dass dort zumindest mehrere verschiedene Raddrehzahlen erfasst werden sollen, nämlich die Raddrehzahlen einer Achse des Zugfahrzeugs und die Raddrehzahlen einer Achse des Anhängers. Insofern sind Drehzahlsensoren sowohl am Zugfahrzeug wie auch an dem Anhänger zu montieren, was einen hohen Aufwand bereits bei der Realisierung der Sensorik und deren Verkabelung bzw. Vernetzung erforderlich macht.

Daher ist es Aufgabe der Erfindung, ein Verfahren und eine Vorrichtung zur Bestimmung des Gespannwinkels zwischen Anhänger und Zugfahrzeug vorzuschlagen, welche die genannten Nachteile überwinden. Insbesondere sollen ein Verfahren und eine Vorrichtung zur Bestimmung des Gespannwinkels vorgeschlagen werden, die mit geringem Aufwand an einem Gespann bestehend aus Sattelzugmaschine und Sattelzugauflieger realisiert werden können.

Gelöst wird die Aufgabe durch ein Verfahren mit den Merkmalen des Anspruchs 1 sowie durch eine Vorrichtung mit den Merkmalen des nebengeordneten Anspruchs.

Demnach wird vorgeschlagen, zur Bestimmung des Gespannwinkels, folgende Schritte auszuführen:

Erfassen von ersten Drehzahlen eines an einer der starren Achse des Anhängers gelagerten ersten Rades;
Erfassen von zweiten Drehzahlen eines an einer der gelenkten Achse des Anhängers gelagerten zweiten Rades;
Erfassen von dritten Drehzahlen eines an der starren oder gelenkten Achse des Anhängers gelagerten dritten Rades;
Auswerten eines Radeinschlagwinkels an der angelenkten Achse des Anhängers; und
Anwenden mindestens einer Berechnungsformel mittels des erfassten Radeinschlagwinkels und der erfassten Drehzahlen oder daraus abgeleiteter Größen.

Die das Verfahren ausführende Vorrichtung weist zur Bestimmung des Gespannwinkels folgende Komponenten auf:

einen ersten Sensor, der erste Drehzahlen eines an einer der starren Achse des Anhängers gelagerten ersten Rades erfasst;
einen zweiten Sensor, der zweite Drehzahlen eines an einer der gelenkten Achse des Anhängers gelagerten zweiten Rades erfasst;
einen dritten Sensor, der dritte Drehzahlen eines an der starren oder gelenkten Achse des Anhängers gelagerten dritten Rades erfasst; wobei
die Recheneinheit der Vorrichtung einen Radeinschlagwinkel an der angelenkten Achse des Anhängers auswertet und mindestens eine Berechnungsformel mittels des erfassten Radeinschlagwinkels und der erfassten Drehzahlen oder daraus abgeleiteter Größen anwendet.

Vorzugsweise beschreibt die mindestens eine Berechnungsformel eine trigonometrische Abhängigkeit der zeitlichen Änderung bzw. Ableitung des Gespannwinkels und dem erfassten Radeinschlagwinkel, den erfassten Drehzahlen und räumlichen Abmessungen des Zugfahrzeug-Anhänger-Gespanns.

Demzufolge werden lediglich an den Achsen des Anhängers, nämlich an der starren Achse und an der angelenkten Achse, Sensoren benötigt, nicht jedoch an den Achsen der Zugmaschine. Insgesamt sind lediglich drei Sensoren erforderlich, wobei entweder zwei Sensoren an der starren Achse und ein dritter Sensor an der angelenkten Achse montiert sind oder alternativ zwei Sensoren an der angelenkten Achse und ein dritter Sensor an der starren Achse montiert sind. Der aktuelle Radeinschlagwinkel an der angelenkten Achse kann von einem Steuergerät, welches die Lenkung steuert, übernommen und von der Recheneinheit ausgewertet bzw. in der Berechnungsformel angewendet werden.

Die Erfindung geht von der Erkenntnis aus, dass keine Drehzahlen an den Achsen der Zugmaschine erfasst werden müssen, sondern die Erfassung von Drehzahlen an den Achsen des Anhängers bzw. Aufliegers ausreichen, um den gesuchten Gespannwinkel bzw. Knickwinkel zu bestimmen.

Vorteilhafte Ausgestaltungen der Erfindung ergeben sich aus den Unteransprüchen.

Demnach werden eine erste und eine zweite Berechnungsformel vorgeschlagen, die alternativ angewendet werden können und jeweils eine trigonometrische Abhängigkeit der zeitlichen Ableitung des Gespannwinkels und dem erfassten Radeinschlagwinkel, den erfassten Drehzahlen und räumlichen Abmessungen des Zugfahrzeug-Anhänger-Gespanns angeben, so dass die zeitliche Ableitung des Gespannwinkels berechnet werden kann.

Vorgeschlagen wird z.B. eine erste Berechnungsformel F1 mit den folgenden Parametern:

$$\alpha' = -0{,}5*[-v9*\sin(\beta)*b+v9*\sin(\beta)*e*\sin(\alpha)+v10*\sin(\beta)*e*\sin(\alpha)$$

$$-2*\cos(\alpha)*\cos(\beta)*e*v9+2*\cos(\alpha)*v11*e$$

$$+b*\sin(\beta)*v10+\cos(\alpha)*\sin(\beta)*c*v9$$

$$-\cos(\alpha)*\sin(\beta)*c*v10+\cos(\alpha)*\sin(\beta)*d*v9$$

$$-\cos(\alpha)*\sin(\beta)*d*v10]/\sin(\beta)/e/b$$

wobei gilt:

$\dot{\alpha}$ = zeitliche Ableitung des Gespannwinkels

$\alpha$ = Gespannwinkel

$\beta$ = Winkel des Radeinschlags an der gelenkten Achse des Anhängers

v9 = Drehzahl / Geschwindigkeit des ersten Rades (starre Achse)

v10 = Drehzahl / Geschwindigkeit des zweiten Rades (starre Achse)

v11 = Drehzahl / Geschwindigkeit des dritten Rades (angelenkte Achse)

b = Abstand zwischen Hinterachse und Knickpunkt der Sattelzugmaschine

c = Abstand zwischen Knickpunkt und starrer Achse des Sattelaufliegers

d = Abstand zwischen angelenkter und starrer Achse des Sattelaufliegers

e = Abstand zwischen Mittenachse und Drehpunkt der angelenkten Achse

Zusätzlich oder alternativ dazu kann auch eine zweite Berechnungsformel F2 mit den folgenden Parametern angewendet werden:

$$\alpha' = 0{,}5*(-2*\cos(\beta)*\sin(\beta)*\cos(\alpha)*e*v11$$

$$+ 2*\cos(\alpha)*\cos(\beta)*\cos(\beta)*\sin(\beta)*v9*e - \cos(\alpha)*c*v11$$

$$+ \cos(\alpha)*d*v12 + \cos(\alpha)*v12*c - \cos(\alpha)*\cos(\beta)*\cos(\beta)*d*v12$$

$$- \cos(\alpha)*d*v11 + \cos(\alpha)*\cos(\beta)*\cos(\beta)*d*v11$$

$$+ \cos(\alpha)*\cos(\beta)*\cos(\beta)*c*v11 - \cos(\alpha)*\cos(\beta)*\cos(\beta)*v12*c$$

$$+ \sin(\alpha)*e*v11-e*\sin(\alpha)*v12 - e*\cos(\beta)*\cos(\beta)*\sin(\alpha)*v11$$

$$+ e*\cos(\beta)*\cos(\beta)*\sin(\alpha)*v12 - 2*\cos(\beta)*\sin(\alpha)*e*v9$$

$$+ 2*e*\cos(\beta)*\cos(\beta)*\cos(\beta)*\sin(\alpha)*v9 - \cos(\beta)*\cos(\beta)*b*v11$$

$$+ b*v11 - b*v12$$

$$+ \cos(\beta)*\cos(\beta)*b*v12)/\cos(\beta)/e/(-b)/(-1+\cos(\beta)*\cos(\beta))$$

wobei gilt:

v9 = Drehzahl / Geschwindigkeit des ersten Rades (starre Achse)
v10 = Drehzahl / Geschwindigkeit des zweiten Rades (starre Achse)
v11 = Drehzahl / Geschwindigkeit des dritten Rades (angelenkte Achse)

Die beiden Berechnungsformeln F1 und F2 stellen jeweils eine Differentialgleichung dar, welche die zeitliche Ableitung $\alpha'$ des gesuchten Gespannwinkels angibt.

Die Differentialgleichungen F1 bzw. F2 können mittels eines Integrationsverfahrens gelöst werden, welches dann als Ergebnis den gesuchten Gespannwinkel $\alpha$ liefert.

Es wird vorgeschlagen das Integrationsverfahren "Euler-Vorwärts" zu verwenden:

$$\alpha_{n+1} = \alpha_n + h\, \alpha'_n$$

wobei gilt:

$\alpha'_n$ = zeitliche Ableitung des Gespannwinkels zum Zeitschritt n
$\alpha$ = Gespannwinkel zum Zeitschritt n
n = Nummer des Zeitschritts (Zähler 0, 1, 2, 3....)
h = Schrittweite des Integrationsverfahrens

Der neue Winkel $\alpha_{n+1}$ wird also aus den Größen $\alpha'_n$ und $\alpha_n$ des vorherigen Zeitschritts n berechnet.

Dann wird geprüft, ob die Differenz der erfassten Raddrehzahlen an der starren Achse des Anhängers das Vorzeichen ändert (die Räder haben gegensinnige Drehrichtung), um dann das Integrationsverfahren anzuhalten.

Vorteilhafterweise ist die das Verfahren ausführende Vorrichtung als ein Steuergerät zur Lenkung des Zugfahrzeug-Anhänger-Gespanns ausgebildet.

Die Erfindung und die sich daraus ergebenden Vorteile werden nachfolgend im Detail anhand der beiliegenden schematischen Zeichnung beschrieben, welche Folgendes darstellen:

Fig. 1 zeigt die Struktur eines Zugfahrzeug-Anhänger-Gespanns, auf welches die Erfindung angewendet werden kann.

Fig. 2 zeigt das Ablaufdiagramm eines erfindungsgemäßen Verfahrens.

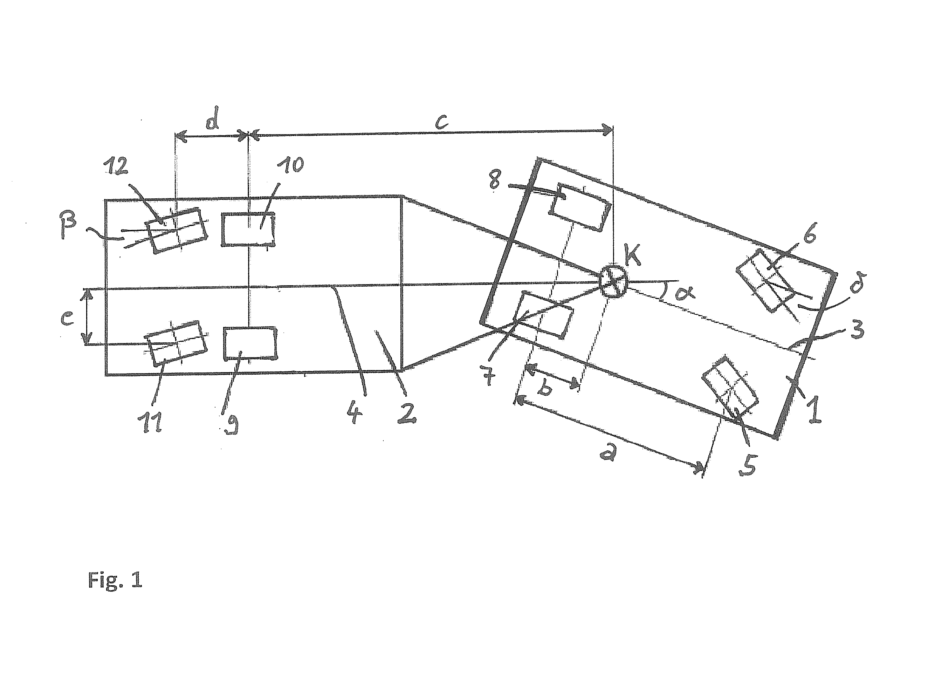

Die Fig. 1 zeigt zur Verdeutlichung der nachfolgend beschriebenen Details die Struktur eines Gespanns bestehend aus einer Zugmaschine 1 und einem damit verbundenen Anhänger bzw. Auflieger 2. In dem vorliegenden Beispiel ist die Zugmaschine als Sattelzugmaschine 1 ausgebildet, die eine starre Hinterachse (Antriebsachse) mit Rädern 7 und 8 aufweist und die eine angelenkte Vorderachse mit Rädern 5 und 6 aufweist. Der Abstand a zwischen beiden Achsen beträgt z.B. 5 Meter. Auf der geometrischen Mittenachse 3 der Zugmaschine 1 befindet sich der Lagerpunkt bzw. Knickpunkt K, an dem die Deichsel des Anhängers 2 angreift. Der Abstand b zwischen Knickpunkt K und Hinterachse beträgt z.B. 0,5 Meter.

Der Anhänger ist im vorliegenden Beispiel als zweiachsiger Sattelauflieger 2 ausgeführt, der eine starre Achse mit Rädern 9 und 10 sowie eine hintere angelenkte Achse mit Rädern 11 und 12 aufweist. Der Abstand d zwischen den beiden Achsen des Sattelaufliegers 2 beträgt z.B. 1,35 Meter. Der Abstand c der vorderen starren Achse zum Knickpunkt K beträgt z.B. 10 Meter. Der Abstand e zwischen der geometrischen Mittenachse des Aufliegers 2 und dem Drehpunkt eines der angelenkten Räder 11 oder 12 beträgt z.B. 1 Meter. Diese Daten bzw. Parameter sind bekannt und z.B. in einem Datenspeicher abgelegt, auf den ein Steuergerät der Lenkung bzw. eine Recheneinheit dafür zugreift.

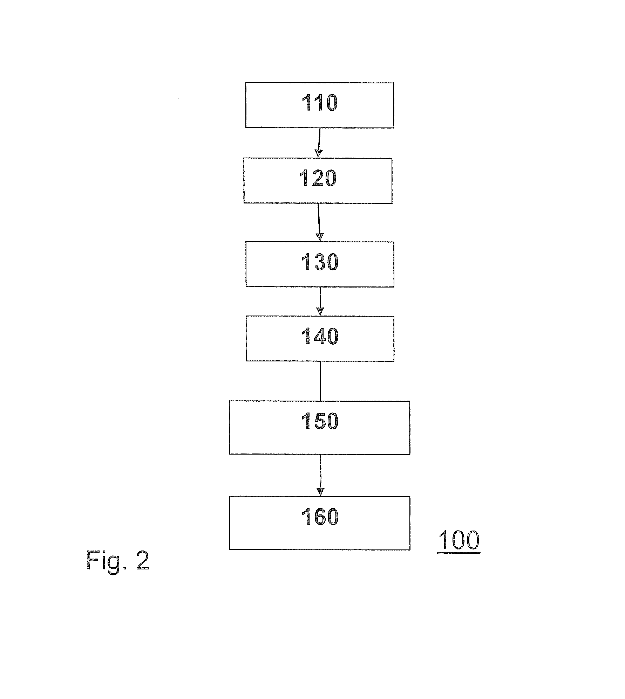

Wie anhand der Fig. 1 zu sehen ist, ergibt sich bei Kurvenfahrten und beim Manövrieren ein Gespannwinkel bzw. Knickwinkel $\alpha$ zwischen den geometrischen Mittenachsen von Zugmaschine 1 und Anhänger 2. Zur Bestimmung des Gespannwinkels $\alpha$ wird nun das nachfolgend auch anhand der Fig. 2 beschriebene Verfahren durchgeführt. Daher wird im Weiteren auf beide Figuren Bezug genommen.

Die Kenntnis des Gespannwinkels bzw. Knickwinkels $\alpha$ ist insbesondere zur Steuerung der Lenkung, nämlich zur Einstellung bzw. zur Korrektur des Radeinschlagwinkels $\beta$ der Räder 11 und 12 der gelenkten Achse des Sattelaufliegers 2 erforderlich. In Kenntnis des Knickwinkels $\alpha$ kann der Sollwert für den Radeinschlagwinkel $\beta$ berechnet werden, z.B. durch die folgende Formel:

Berechnungsformel für den Radeinschlagwinkel $\beta$:

$$\beta = \arctan [d \cdot \sin (\alpha) / c / \cos (\alpha) ]$$

wobei gilt:

$\alpha$ = Gespannwinkel
c = Abstand zwischen Knickpunkt und starrer Achse des Sattelaufliegers (Anhängers)
d = Abstand zwischen angelenkter und starrer Achse des Sattelaufliegers

Zur Bestimmung Knickwinkels $\alpha$ wäre eine direkte Messung des Knickwinkels $\alpha$ technisch sehr aufwendig. Die direkte Messung soll sich durch Anwendung des hier vorgeschlagenen Verfahrens erübrigen.

Die Erfindung geht von der Erkenntnis aus, dass der Knickwinkel $\alpha$ effektiv anhand der Raddrehzahlen des Sattelaufliegers 2 berechnet werden kann, ohne Raddrehzahlen der Sattelzugmaschine 1 erfassen zu müssen. Dadurch ist die hier vorgeschlagene Lösung unabhängig von Fahrzeugsignalen der Sattelzugmaschine und/oder einer dort anzubringenden Sensorik. Alle benötigten Raddrehzahlen können bereits über Sensoren an drei Rädern des Sattelaufliegers 2 berechnet werden. Als Sensoren können auch Standardsensoren verwendet werden, die bei heutigen Bremssystemen zum Einsatz kommen.

Das erfindungsgemäße Verfahren 100 umfasst nun die folgenden Schritte (siehe Fig. 1 und 2 sowie unten stehende Formeln F1 und F2):

In einem ersten Schritt 110 werden erste Drehzahlen v9 des Rades 9 an der starren Achse des Anhängers 2 erfasst. Dann werden in einem Schritt 120 zweite Drehzahlen v11 des Rades 11 an der gelenkten Achse des Anhängers 2 erfasst. Außerdem werden in einem Schritt 130 dritte Drehzahlen v10 des anderen Rades 10 an der starren Achse erfasst.

Außerdem wird in einem Schritt 140 der Radeinschlagwinkel $\beta$ an der angelenkten Achse 2 ausgewertet bzw. von dem Datenspeicher des Steuergeräts der Lenkung übernommen. Die Reihenfolge der Schritte 110 bis 140 ist beliebig.

Dann wird in einem Schritt 150 zumindest eine erste Berechnungsformel F1 angewendet, die für die Bestimmung der zeitlichen Ableitung $\alpha'$ des gesuchten Gespannwinkels vorgeschlagen wird. Dies geschieht nach der Formel F1, welche lautet:

$$\alpha' = -0.5*[-v9*\sin(\beta)*b+v9*\sin(\beta)*e*\sin(\alpha)+v10*\sin(\beta)*e*\sin(\alpha)-$$
$$2*\cos(\alpha)*\cos(\beta)*e*v9+2*\cos(\alpha)*v11*e +b*\sin(\beta)*v10+\cos(\alpha)*\sin(\beta)*c*v9-$$
$$\cos(\alpha)*\sin(\beta)*c*v10+\cos(\alpha)*\sin(\beta)*d*v9$$
$$-\cos(\alpha)*\sin(\beta)*d*v10]/\sin(\beta)/e/b$$

Hierbei gilt:

$\dot{\alpha}$ = zeitliche Ableitung des Gespannwinkels
$\alpha$ = Gespannwinkel
$\beta$ = Winkel des Radeinschlags an der gelenkten Achse des Anhängers
v9 = Drehzahl / Geschwindigkeit des ersten Rades 9 (starre Achse)
v10 = Drehzahl / Geschwindigkeit des zweiten Rades 10 (starre Achse)
v11 = Drehzahl / Geschwindigkeit des dritten Rades 11 (angelenkte Achse)
b = Abstand zwischen Hinterachse und Knickpunkt der Sattelzugmaschine
c = Abstand zwischen Knickpunkt und starrer Achse des Sattelaufliegers
d = Abstand zwischen angelenkter und starrer Achse des Sattelaufliegers
e = Abstand zwischen Mittenachse und Drehpunkt der angelenkten Achse

Es werden also gemäß der Formel F1 die Drehzahlen bzw. Geschwindigkeiten der beiden Räder 9 und 10 an der starren Achse sowie eines Rades (hier Rad 11) an der angelenkten Achse verarbeitet, um als Ergebnis die zeitliche Ableitung $\dot{\alpha}$ des gesuchten Gespannwinkels $\alpha$ zu erhalten.

Um das Ergebnis zu verifizieren, kann zudem im Schritt 150, eine zweite Berechnungsformel F2 angewendet.

Dabei ist zu beachten, dass nun nicht die Raddrehzahl v10 am Rad 10 erfasst wird, sondern die Raddrehzahl v12 am Rad 12 (siehe auch Fig. 1). Die zweite Formel F2 lautet:

$$\alpha' = 0.5*(-2*\cos(\beta)*\sin(\beta)*\cos(\alpha)*e*v11$$

$$+ 2*\cos(\alpha)*\cos(\beta)*\cos(\beta)*\sin(\beta)*v9*e - \cos(\alpha)*c*v11$$

$$+ \cos(\alpha)*d*v12 + \cos(\alpha)*v12*c - \cos(\alpha)*\cos(\beta)*\cos(\beta)*d*v12$$

$$- \cos(\alpha)*d*v11 + \cos(\alpha)*\cos(\beta)*\cos(\beta)*d*v11$$

$$+ \cos(\alpha)*\cos(\beta)*\cos(\beta)*c*v11 - \cos(\alpha)*\cos(\beta)*\cos(\beta)*v12*c$$

$$+ \sin(\alpha)*e*v11 - e*\sin(\alpha)*v12 - e*\cos(\beta)*\cos(\beta)*\sin(\alpha)*v11$$

$$+ e*\cos(\beta)*\cos(\beta)*\sin(\alpha)*v12 - 2*\cos(\beta)*\sin(\alpha)*e*v9$$

$$+ 2*e*\cos(\beta)*\cos(\beta)*\cos(\beta)*\sin(\alpha)*v9 - \cos(\beta)*\cos(\beta)*b*v11 + b*v11 - b*v12$$

$$+ \cos(\beta)*\cos(\beta)*b*v12)/\cos(\beta)/e/(-b)/(-1+\cos(\beta)*\cos(\beta))$$

Hierbei gilt:

v9 = Drehzahl / Geschwindigkeit des ersten Rades 9 (starre Achse);
v12 = Drehzahl / Geschwindigkeit des zweiten Rades 12 (angelenkte Achse);
v11 = Drehzahl / Geschwindigkeit des dritten Rades 11 (angelenkte Achse)

Es werden also gemäß der Formel F2 die Drehzahlen bzw. Geschwindigkeiten der beiden Räder 11 und 12 an der angelenkten Achse sowie eines Rades (hier Rad 9) an der starren Achse gemessen und zur Berechnung von $\alpha'$ herangezogen.

Um nun den gesuchten Gespannwinkel $\alpha_{n+1}$ zu erhalten werden die Größen $\alpha'_n$ und $\alpha_n$ mit Hilfe des folgenden Integrationsverfahrens (Euler-Vorwärts) miteinander kombiniert:

$$\alpha_{n+1} = \alpha_n + h \cdot \alpha'_n$$

wobei gilt:

$\alpha'_n$ = zeitliche Ableitung des Gespannwinkels zum Zeitschritt n
$\alpha_n$ = Gespannwinkel zum Zeitschritt n
$\alpha_{n+1}$ = Gespannwinkel zum Zeitschritt n+1
n = Nummer des Zeitschritts (Zähler 0, 1, 2, 3....)
h = Schrittweite des Integrationsverfahrens

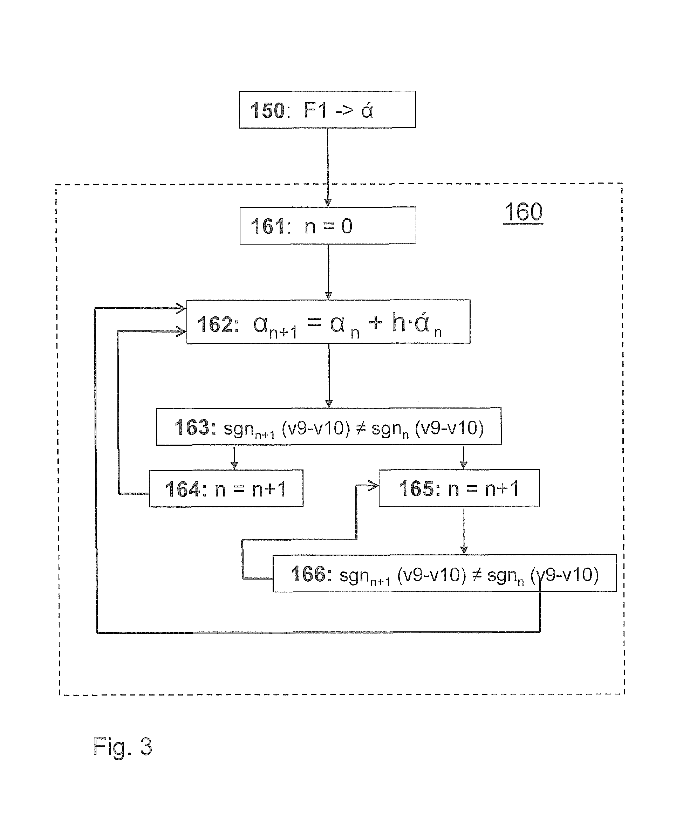

Die Schrittweite h kann vorzugsweise aus der Taktzeit des Steuergerätes übernommen werden. Jedes andere Integrationsverfahren ist ebenfalls anwendbar. Die Vorgehensweise wird hier anhand der Fig. 3 näher beschrieben:

Zu Beginn des Integrationsverfahrens 160 wird in einem Schritt 161 als Startwert der Zähler n auf Null gesetzt. Auch wird der Anfangswert von $\alpha$ auf Null gesetzt ($\alpha_0 = 0$). Die geschieht z.B. beim Einschalten des Steuergerätes bzw. bei jedem Reset. Das Integrationsverfahren startet also mit dem Knickwinkel $\alpha_0 = 0$.

In einem Schritt 162 wird nun der erste Wert (n=1) für $\alpha$ berechnet, nämlich: $\alpha_{n+1} = \alpha_n + h \cdot \alpha'_n$. Dieser Schritt 162 wird dann für jedes weitere n wiederholt, wozu im Schritt 164 die Zahlvariable immer um 1 erhöht wird (n= n+1). Zuvor wird aber in einem Schritt 163 geprüft, ob die Integration angehalten werden soll. Dazu wird geprüft, ob sich die Drehzahldifferenz der Räder an der starren Achse des Aufliegers ändert. Da die Sensorik nicht die Drehrichtung der

# EP 2 479 086 A2

Räder erfasst, wird im Schritt 163 geprüft, ob ein Vorzeichenwechsel bezüglich der Differenz v9-v10 auftritt. Denn ein solches Ereignis zeigt an, dass die Räder an der starren Achse gegensinnig drehen. Im Schritt 163 wird also mittels der Vorzeichenfunktion sgn geprüft, ob das Vorzeichen der aktuellen Differenz sich gegenüber dem Vorzeichen der vorhergehenden Differenz geändert hat, indem folgende Formel angewendet wird: $\mathrm{sgn}_{n+1} (v9-v10) \neq \mathrm{sgn}_n (v9-v10)$.

Tritt ein Vorzeichenwechsel auf, d.h. ist $\mathrm{sgn}_{n+1}$ ungleich $\mathrm{sgn}_n$ , dann wird im Schritt 165 das Integrationsverfahren angehalten bis wieder ein Vorzeichenwechsel im Schritt 116 auftritt. Andernfalls wird das Verfahren fortgesetzt durch Erhöhung der Zählvariablen n = n+1 im Schritt 164 und anschließender Wiederholung des Schritts 162 usw..

Es hat sich gezeigt, dass mit dem hier beschriebenen Verfahren 100 Knickwinkel im Bereich bis zu etwa 70 Grad sicher berechnet werden können. Dies ist für die Korrektur des Radeinschlagswinkels $\beta$ vollkommen ausreichend.

Das Verfahren 100 kann in eine Vorrichtung implementiert werden, die eine Recheneinheit aufweist, wie z.B. in ein Steuergerät für die Fahrzeuglenkung.

**Bezugszeichenliste**

1    Zugfahrzeug (hier: Sattelzugmaschine)

2    Anhänger (hier: Sattelauflieger)

3    Mittelachse Sattelzugmaschine

4    Mittelachse Sattelauflieger

5    rechtes Vorderrad der Sattelzugmaschine

6    linkes Vorderrad der Sattelzugmaschine

7    rechtes Rad der Antriebsachse der Sattelzugmaschine

8    linkes Rad der Antriebsachse der Sattelzugmaschine

9    rechtes Rad der starren Achse des Sattelaufliegers

10    linkes Rad der starren Achse des Sattelaufliegers

11    rechtes Rad der gelenkten Achse des Sattelaufliegers

12    linkes Rad der gelenkten Achse des Sattelaufliegers

$\alpha$    Gespannwinkel (Knickwinkel zwischen Sattelzugmaschine und Sattelauflieger)

$\beta$    Winkel des Radeinschlags an der gelenkten Achse des Sattelaufliegers

$\delta$    Winkel des Radeinschlags an der Vorderachse der Sattelzugmaschine

K    Knickpunkt zwischen Sattelzugmaschine und Sattelauflieger

$\dot{\alpha}$    zeitliche Ableitung des Gespannwinkels (Knickwinkels)

v9    Geschwindigkeit rechtes Rad der starren Achse des Sattelaufliegers

v10    Geschwindigkeit linkes Rad der starren Achse des Sattelaufliegers

v11    Geschwindigkeit rechtes Rad der gelenkten Achse des Sattelaufliegers

v12    Geschwindigkeit linkes Rad der gelenkten Achse des Sattelaufliegers (Geschwindigkeiten abgeleitet aus Raddrehzahlen)

7

a    Abstand zwischen Vorder- und Hinterachse der Sattelzugmaschine

b    Abstand zwischen Hinterachse und Knickpunkt der Sattelzugmaschine

c    Abstand zwischen Knickpunkt und starrer Achse des Sattelaufliegers

d    Abstand zwischen angelenkter und starrer Achse des Sattelaufliegers

e    Abstand zwischen Mittenachse und Drehpunkt der angelenkten Achse


**Patentansprüche**

1.  Verfahren (100) zur Bestimmung des Gespannwinkels ($\alpha$) zwischen Zugfahrzeug (1) und Anhänger (2) eines Zugfahrzeug-Anhänger-Gespanns, wobei Drehzahlen von Rädern zumindest einer Achse des Anhängers (2) erfasst werden, **gekennzeichnet durch** folgende Schritte:

    Erfassen (110) von ersten Drehzahlen (v9) eines an einer der starren Achse des Anhängers (2) gelagerten ersten Rades (9);
    Erfassen (120) von zweiten Drehzahlen (v11) eines an einer der gelenkten Achse des Anhängers (2) gelagerten zweiten Rades (11);
    Erfassen (130) von dritten Drehzahlen (v10; v12) eines an der starren oder gelenkten Achse des Anhängers (2) gelagerten dritten Rades (10; 12);
    Auswerten (140) eines Radeinschlagwinkels ($\beta$) an der angelenkten Achse des Anhängers (2); und
    Anwenden (150) mindestens einer Berechnungsformel (F1; F2) mittels des erfassten Radeinschlagwinkels ($\beta$) und der erfassten Drehzahlen oder daraus abgeleiteter Größen.

2.  Verfahren (100) nach Anspruch 1, **dadurch gekennzeichnet, dass** die mindestens eine Berechnungsformel (F1; F2) eine trigonometrische Abhängigkeit der zeitlichen Änderung bzw. Ableitung ($\alpha$') des Gespannwinkels ($\alpha$) und dem erfassten Radeinschlagwinkel ($\beta$), den erfassten Drehzahlen (v9, v10, v11, v12) und räumlichen Abmessungen (b, c, d, e) des Zugfahrzeug-Anhänger-Gespanns beschreibt.

3.  Verfahren (100) nach Anspruch 1 oder 2, **dadurch gekennzeichnet, dass** eine erste Berechnungsformel (F1) mit den folgenden Parametern angewendet wird:

$$\alpha' = -0,5*[-v9*\sin(\beta)*b+v9*\sin(\beta)*e*\sin(\alpha)+v10*\sin(\beta)*e*\sin(\alpha)$$

$$-2*\cos(\alpha)*\cos(\beta)*e*v9+2*\cos(\alpha)*v11*e$$

$$+b*\sin(\beta)*v10+\cos(\alpha)*\sin(\beta)*c*v9$$

$$-\cos(\alpha)*\sin(\beta)*c*v10+\cos(\alpha)*\sin(\beta)*d*v9$$

$$-\cos(\alpha)*\sin(\beta)*d*v10]/\sin(\beta)/e/b$$

wobei gilt:

$\dot{\alpha}$ = zeitliche Ableitung des Gespannwinkels
$\alpha$ = Gespannwinkel
$\beta$ = Winkel des Radeinschlags an der gelenkten Achse des Anhängers
v9 = Drehzahl / Geschwindigkeit des ersten Rades 9 (starre Achse)
v10 = Drehzahl / Geschwindigkeit des zweiten Rades 10 (starre Achse)
v11 = Drehzahl / Geschwindigkeit des dritten Rades 11 (angelenkte Achse)
b = Abstand zwischen Hinterachse und Knickpunkt der Sattelzugmaschine
c = Abstand zwischen Knickpunkt und starrer Achse des Sattelaufliegers
d = Abstand zwischen angelenkter und starrer Achse des Sattelaufliegers
e = Abstand zwischen Mittenachse und Drehpunkt der angelenkten Achse

**4.** Verfahren (100) nach einem der Ansprüche 1 bis 3, **dadurch gekennzeichnet, dass** eine zweite Berechnungsformel (F2) mit den folgenden Parametern angewendet wird:

$$\alpha' = 0{,}5*(-2*\cos(\beta)*\sin(\beta)*\cos(\alpha)*e*v11$$
$$+ 2*\cos(\alpha)*\cos(\beta)*\cos(\beta)*\sin(\beta)*v9*e - \cos(\alpha)*c*v11$$
$$+ \cos(\alpha)*d*v12 + \cos(\alpha)*v12*c - \cos(\alpha)*\cos(\beta)*\cos(\beta)*d*v12$$
$$- \cos(\alpha)*d*v11 + \cos(\alpha)*\cos(\beta)*\cos(\beta)*d*v11$$
$$+ \cos(\alpha)*\cos(\beta)*\cos(\beta)*c*v11 - \cos(\alpha)*\cos(\beta)*\cos(\beta)*v12*c$$
$$+ \sin(\alpha)*e*v11 - e*\sin(\alpha)*v12 - e*\cos(\beta)*\cos(\beta)*\sin(\alpha)*v11$$
$$+ e*\cos(\beta)*\cos(\beta)*\sin(\alpha)*v12 - 2*\cos(\beta)*\sin(\alpha)*e*v9$$
$$+ 2*e*\cos(\beta)*\cos(\beta)*\cos(\beta)*\sin(\alpha)*v9 - \cos(\beta)*\cos(\beta)*b*v11$$
$$+ b*v11 - b*v12$$
$$+ \cos(\beta)*\cos(\beta)*b*v12)/\cos(\beta)/e/(-b)/(-1+\cos(\beta)*\cos(\beta))$$

wobei gilt:

$\dot{\alpha}$ = zeitliche Ableitung des Gespannwinkels
$\alpha$ = Gespannwinkel
$\beta$ = Winkel des Radeinschlags an der gelenkten Achse des Anhängers
v9 = Drehzahl / Geschwindigkeit des ersten Rades (starre Achse)
v12 = Drehzahl / Geschwindigkeit des zweiten Rades (angelenkte Achse)
v11 = Drehzahl / Geschwindigkeit des dritten Rades (angelenkte Achse)
b = Abstand zwischen Hinterachse und Knickpunkt der Sattelzugmaschine
c = Abstand zwischen Knickpunkt und starrer Achse des Sattelaufliegers
d = Abstand zwischen angelenkter und starrer Achse des Sattelaufliegers
e = Abstand zwischen Mittenachse und Drehpunkt der angelenkten Achse

**5.** Verfahren (100) nach Ansprüchen 3 und 4, **dadurch gekennzeichnet, dass** die erste Berechnungsformel (F1) und die zweite Berechnungsformel (F2) parallel angewendet werden, um die Bestimmung des Gespannwinkels ($\alpha$) zu verifizieren.

**6.** Verfahren (100) nach einem der Ansprüche 2 bis 5, **dadurch gekennzeichnet, dass** die aus der mindestens einen Berechnungsformel (F1; F2) berechnete zeitliche Ableitung ($\alpha'$) und der gesuchte Gespannwinkel ($\alpha$) in Form einer Differentialgleichung miteinander in Beziehung gestellt werden, wobei die Differentialgleichung mittels eines Integrationsverfahrens (160) gelöst wird, insbesondere mittels des Euler-Vorwärts-Verfahrens (160) gelöst wird.

**7.** Verfahren (100) nach Anspruch 6, **dadurch gekennzeichnet, dass** die Differentialgleichung (F1; F2) wie folgt gelöst wird:

$$\alpha_{n+1} = \alpha_n + h \cdot \alpha'$$

wobei gilt:

$\alpha'_n$ = zeitliche Ableitung des Gespannwinkels zum Zeitschritt n
$\alpha_n$ = Gespannwinkel zum Zeitschritt n
$\alpha_{n+1}$ = Gespannwinkel zum Zeitschritt n+1
n = Nummer des Zeitschritts (Zähler 0, 1, 2, 3....)
h = Schrittweite des Integrationsverfahrens

8. Verfahren (100) nach Anspruch 7, **dadurch gekennzeichnet, dass** innerhalb des Integrationsverfahrens (160) geprüft wird (163), ob sich das Vorzeichen aus einer Drehzahldifferenz der Räder (9, 10) der starren Achse ändert, um dann das Integrationsverfahren (160) solange anzuhalten bis sich das Vorzeichen aus der Drehzahldifferenz wieder ändert, also eine Vorzeichenumkehr auftritt.

9. Vorrichtung zur Bestimmung des Gespannwinkels ($\alpha$) zwischen einem Zugfahrzeug (1) und einem Anhänger (2) eines Zugfahrzeug-Anhänger-Gespanns, wobei die Vorrichtung Sensoren und mindestens eine damit verbundene Recheneinheit aufweist, die Drehzahlen von Rädern zumindest einer Achse des Anhängers (2) erfassen, **gekennzeichnet durch:**

   einen ersten Sensor, der erste Drehzahlen (v9) eines an einer der starren Achse des Anhängers (2) gelagerten ersten Rades (9) erfasst;
   einen zweiten Sensor, der zweite Drehzahlen (v11) eines an einer der gelenkten Achse des Anhängers (2) gelagerten zweiten Rades (11) erfasst;
   einen dritten Sensor, der dritte Drehzahlen (v10; v12) eines an der starren oder gelenkten Achse des Anhängers (2) gelagerten dritten Rades (10; 12) erfasst; wobei
   die Recheneinheit einen Radeinschlagwinkel ($\beta$) an der angelenkten Achse des Anhängers (2) auswertet und mindestens eine Berechnungsformel (F1; F2) mittels des erfassten Radeinschlagwinkels ($\beta$) und der erfassten Drehzahlen oder daraus abgeleiteter Größen anwendet.

10. Vorrichtung nach Anspruch 9, **dadurch gekennzeichnet, dass** die Recheneinheit das Verfahren nach einem der Ansprüche 2 bis 8 ausführt.

11. Vorrichtung nach einem der Ansprüche 9 oder 10, **dadurch gekennzeichnet, dass** die Vorrichtung als ein Steuergerät zur Lenkung des Zugfahrzeug-Anhänger-Gespanns ausgebildet ist.

12. Vorrichtung nach einem der Ansprüche 11, **dadurch gekennzeichnet, dass** das Zugfahrzeug als eine Sattelzugmaschine (1) und der Anhänger als ein Sattelzugauflieger ausgebildet sind.

Fig. 1

11

Fig. 2

100

150: F1 -> ά

161: n = 0

160

162: $\alpha_{n+1} = \alpha_n + h \cdot \acute{\alpha}_n$

163: $\text{sgn}_{n+1} (v9-v10) \neq \text{sgn}_n (v9-v10)$

164: n = n+1

165: n = n+1

166: $\text{sgn}_{n+1} (v9-v10) \neq \text{sgn}_n (v9-v10)$

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10333998 A1